# EUROPÄISCHE PATENTANMELDUNG

(11) **EP 2 644 319 A1**
(43) Veröffentlichungstag der Anmeldung: **02.10.2013**
(21) Anmeldenummer: 12002285.0
(22) Anmeldetag: 29.03.2012
(51) Int. Cl.: B23Q 17/24, G01B 11/10, G01B 11/24

(54) **Werkzeugmaschine und Verfahren zur Ermittlung einer Geometrie eines Werkstücks**

(71) Anmelder: BDL System-Technik GmbH, 73262 Reichenbach (DE)
(72) Erfinder: Bohle, Reinhard, 72469 Wolfschlugen (DE); Lehnert, Hanspeter, 73035 Göppingen (DE)
(74) Vertreter: Kocher, Mark Werner

(57) **Zusammenfassung**

Die Erfindung betrifft eine Werkzeugmaschine mit einem Maschinenbett (2), einem daran angebrachten Werkstückhalter (3) und einem linearbeweglich am Maschinenbett (2) gelagerten Positioniermittel (4), dem eine Antriebseinrichtung zur Einleitung einer Relativbewegung zwischen Maschinenbett (2) und Positioniermittel (4) und eine Wegmesseinrichtung (8, 9) zur Ermittlung einer Position des Positioniermittels (4) gegenüber dem Maschinenbett (2) zugeordnet sind, sowie mit einer Steuereinrichtung (15), die mit der Antriebseinrichtung und mit der Wegmesseinrichtung (8, 9) gekoppelt ist und die für eine Positionssteuerung oder Positionsregelung des am Positioniermittels (4) gegenüber dem Maschinenbett (2) ausgebildet ist. Erfindungsgemäß ist vorgesehen, dass dem Positioniermittel (4) ein Messwerkzeug (16) zugeordnet ist, das eine Sendeeinrichtung (20) zur Aussendung eines Detektionsstrahls und eine der Sendeeinrichtung (20) gegenüberliegend angeordnete Empfangseinrichtung (21) zum Empfang des Detektionsstrahls umfasst und das zur Ermittlung einer Werkstückausdehnung, insbesondere eines Durchmessers, eines im Werkstückhalter (3) aufnehmbaren Werkstücks (12) ausgebildet ist.

## Beschreibung

Die Erfindung betrifft eine Werkzeugmaschine mit einem Maschinenbett, einem daran angebrachten Werkstückhalter und einem linearbeweglich am Maschinenbett gelagerten Positioniermittel, dem eine Antriebseinrichtung zur Einleitung einer Relativbewegung zwischen Maschinenbett und Positioniermittel und eine Wegmesseinrichtung zur Ermittlung einer Position des Positioniermittels gegenüber dem Maschinenbett zugeordnet sind, sowie mit einer Steuereinrichtung, die mit der Antriebseinrichtung und mit der Wegmesseinrichtung gekoppelt ist und die für eine Positionssteuerung oder Positionsregelung des Positioniermittels gegenüber dem Maschinenbett ausgebildet ist. Ferner betrifft die Erfindung ein Verfahren zur Ermittlung einer Geometrie eines Werkstücks.

Bei der Bearbeitung von Werkstücken, beispielsweise mit spanenden Trennverfahren wie Drehen, Schleifen, Fräsen, ist es bekannt, das zu bearbeitende Werkstück nach der Durchführung eines Bearbeitungsschritts zumindest im Bereich einer Bearbeitungszone, in der während des Bearbeitungsschritts ein Bearbeitungswerkzeug mit dem Werkstück in Eingriff war und einen Materialabtrag durchgeführt hat, zu vermessen. Hierzu muss ein Maschinenbediener unter Verwendung eines Messwerkzeugs wie eines Messschiebers oder einer Messschraube, das an geeigneter Stelle an die Werkstückoberfläche angelegt wird, ein Maß ermitteln und das ermittelte Maß in Beziehung zum vorgegebenen Ergebnis des vorher erfolgten Bearbeitungsschritts setzen. Anschließend muss der Benutzer bei Vorliegen einer Abweichung zwischen vorgegebenem Ergebnis und tatsächlich gemessenem Maß eine Korrektur der Position des Bearbeitungswerkzeugs, beispielsweise durch manuelles Verstellen einer Position des Bearbeitungswerkzeugs oder durch Eingabe eines Korrekturwerts in eine Maschinensteuerung vornehmen, um bei der nachfolgenden Durchführung eines nächsten Bearbeitungsschritts eine maßhaltige Bearbeitung des Werkstücks sicherstellen zu können. Ein derartiges Vorgehen ist personalaufwendig und fehlerbehaftet, da die Handhabung des Messwerkzeugs, besonders bei größeren Dimensionen des Werkstücks, sowie die Auswertung des Messergebnisses und die daraufhin möglicherweise notwendigen Korrekturmaßnahmen erhebliche Fehlerquellen bedeuten.

Die Aufgabe der Erfindung besteht darin, eine Werkzeugmaschine und ein Verfahren zur Ermittlung einer Geometrie eines Werkstücks anzugeben, die eine Automatisierung des Messvorgangs zur Reduzierung des Personalaufwands und möglicher Fehlerquellen ermöglichen.

Diese Aufgabe wird gemäß einem ersten Aspekt der Erfindung für eine Werkzeugmaschine der eingangs genannten Art mit den Merkmalen des Anspruchs 1 gelöst. Hierbei ist vorgesehen, dass dem Positioniermittel ein Messwerkzeug zugeordnet ist, das eine Sendeeinrichtung zur Aussendung eines Detektionsstrahls und eine der Sendeeinrichtung gegenüberliegend angeordnete Empfangseinrichtung zum Empfang des Detektionsstrahls umfasst und das zur Ermittlung einer Werkstückausdehnung, insbesondere eines Durchmessers, eines im Werkstückhalter aufnehmbaren Werkstücks ausgebildet ist.

Mit Hilfe der erfindungsgemäßen Werkzeugmaschine, die ein zur berührungslosen Abtastung des Werkstücks mittels eines Detektionsstrahls ausgebildetes Messewerkzeug umfasst, kann ohne die Notwendigkeit eines manuellen Eingriffs eines Bedieners eine automatische Vermessung einer Geometrie des Werkstücks, insbesondere eines Werkstückdurchmessers, vorgenommen werden. Hierbei ist vorteilhaft, dass das Messwerkzeug an dem Positioniermittel aufgenommen ist und somit von dessen präziser Lagerung am Maschinenbett der Werkzeugmaschine profitiert. Das Positioniermittel kann wahlweise nur zur Aufnahme des Messwerkzeugs oder auch zur Aufnahme eines Werkzeugs zur Bearbeitung des Werkstücks ausgebildet sein. Das Positioniermittel kann beispielsweise bei einer Drehmaschine zusätzlich zur Aufnahme des Messwerkzeugs auch zur Aufnahme eines Drehmeißels vorgesehen sein oder bei einer Fräsmaschine einen Fräskopf und ein daran anbringbares Fräswerkzeug tragen. Das Positioniermittel kann bei der Drehmaschine exemplarisch für eine linearbewegliche Verstellung des Werkzeugs quer zu einer Rotationsachse des Werkstücks ausgebildet sein.

Die zwischen Positioniermittel und Maschinenbett vorgesehene Linearführung bestimmt die Genauigkeit der Bearbeitung und erfindungsgemäß auch die Genauigkeit des Messverfahrens. Wenn das Positioniermittel für die Aufnahme des Messwerkzeugs sowie eines Werkzeugs zur Bearbeitung des Werkstücks ausgebildet ist, kann das Wegmesssystem des Positioniermittels in vorteilhafter Weise in einer Doppelfunktion sowohl für die Ermittlung der Position des Werkszeugs als auch für die Ermittlung der Position des Messwerkzeugs eingesetzt werden. Hierbei ist es besonders vorteilhaft, wenn sowohl das Messwerkzeug als auch das Werkzeug zur Bearbeitung des Werkstücks für die Durchführung des Messvorgangs in ihrer Position am Positioniermittel verbleiben können, da hierdurch Ungenauigkeiten, wie sie durch das Austauschen von Werkzeug und Messwerkzeug in einer gemeinsamen Halterung auftreten können, vermieden werden. Das Messwerkzeug umfasst eine Sendeeinrichtung und eine Empfangseinrichtung, die zur Aussendung bzw. zum Empfang eines Detektionsstrahls ausgebildet sind. Der Detektionsstrahl wird von dem Werkstück unterbrochen, sobald dieses eine Strahlachse des Detektionsstrahls zwischen der Sendeeinrichtung und der Empfangseinrichtung schneidet. Somit kann beispielsweise bei einer Bewegung des Messwerkzeugs, die quer zu einer Rotationsachse eines in einem Spannfutter einer Drehmaschine aufgenommenen Werkstücks durchgeführt wird, eine erste Position bestimmt werden, an der das Werkstück die Strahlachse zum ersten Mal schneidet und der Detektionsstrahl unterbrochen wird. Bei einer Weiterbewegung des Messwerkzeugs quer zur Rotationsachse kann ferner eine zweite Position bestimmt werden, an der das Werkstück die Strahlachse nicht mehr schneidet und damit der Detektionsstrahl wieder ausgehend von der Sendeeinrichtung auf die Empfangseinrichtung auftreffen kann. Die vorzugsweise mit Hilfe des dem Positioniermittel zugeordneten Wegmesssystems ermittelte Wegdifferenz zwischen der zweiten Position und der ersten Position entspricht dann der gesuchten Geometrie des Werkstücks, beispielsweise einem Werkstückdurchmesser. Aufgrund der Nutzung eines Differenzmessverfahrens können für die Messgenauigkeit ungünstige Einflüsse wie die Wärmeausdehnung des Maschinenbetts und/oder des Positioniermittels und/oder des dem Positioniermittel zugeordneten Wegmesssystems stark reduziert, insbesondere eliminiert, werden.

Vorzugsweise ist im Messwerkzeug neben der Sende- und der Empfangseinrichtung auch eine elektronische Verarbeitungseinrichtung angeordnet, die für eine Ansteuerung der Sendeeinrichtung und für eine Auswertung der Signale der Empfangseinrichtung ausgebildet ist. Die Verarbeitungseinrichtung kann zusätzlich für eine drahtlose oder drahtgebundene Kommunikation mit einer Maschinensteuerung der Werkzeugmaschine ausgebildet sein.

Ergänzend oder alternativ umfasst die Verarbeitungseinrichtung eine im Messwerkzeug integrierte oder räumlich davon abgesetzte Anzeigeeinrichtung, die für die Anzeige eines Funktionszustands und gegebenenfalls für die Anzeige der ermittelten Geometrie des Werkstücks ausgebildet ist. Besonders vorteilhaft bei einem derartigen Messwerkzeug ist auch, dass aufgrund der Differenzbildung zwischen der zweiten und der ersten Position eine Reihe von Messfehlern ausgeschaltet werden kann.

Vorteilhafte Weiterbildungen der Erfindung sind in den Unteransprüchen angegeben.

Zweckmäßig ist es, wenn die Sendeeinrichtung als Lichtquelle, insbesondere als Laserlichtquelle, und die Empfangseinrichtung als lichtempfindlicher Sensor, insbesondere als Fotodiode oder Fototransistor, ausgebildet sind. Mit Hilfe eines stark gebündelten, insbesondere kollimierten, Lichtstrahls kann eine präzise und kostengünstige berührungslose Abtastung des Werkstücks erreicht werden. Vorzugsweise ist die Lichtquelle derart ausgebildet, dass sie zumindest nahezu ausschließlich parallele Lichtstrahlen mit einem möglichst geringen Strahlquerschnitt abgibt, dies kann in besonders vorteilhafter Weise mit einer Laserlichtquelle, beispielsweise in Form einer Laserdiode, erreicht werden. Hierbei soll der Begriff des Lichts sowohl den für den Menschen sichtbaren Wellenlängenbereich als auch angrenzende Wellenlängenbereiche im Infrarot- und Ultraviolettbereich umfassen. Durch die Ausgestaltung des Messwerkzeugs in der Art einer Gabellichtschranke wird erreicht, dass auch Werkstücke mit großer geometrischer Vielfalt, beispielsweise mit großen Durchmessersprüngen, mit einem einzigen Messwerkzeug vermessen werden können, wodurch ein erheblicher Vorteil gegenüber tastenden Messverfahren, insbesondere einem manuellen Messverfahren mit Bügelmesschrauben, erzielt wird, da es nicht erforderlich ist, für die unterschiedlichen Durchmesser unterschiedliche Messwerkzeuge einzusetzen.

Die Empfangseinrichtung kann als einzelne lichtempfindliche Zelle, beispielsweise als Fototransistor oder Fotodiode ausgebildet sein. Alternativ ist die Empfangseinrichtung als linienförmige oder flächige Anordnung mehrerer lichtempfindlicher Zellen, beispielsweise als Sensormatrix, ausgebildet. Hierdurch wird eine Ausrichtung von Sendeeinrichtung und Empfangseinrichtung erleichtert, da ein großer lichtempfindlicher Bereich zur Verfügung gestellt wird, in dem mehrere voneinander unterscheidbare und einzeln auswertbare lichtempfindliche Zellen enthalten sind, wodurch die Anforderungen an die mechanische Positionierung des Sensors geringer gewählt werden können, als dies bei einer einzigen Zelle der Fall wäre, da die Zelle oder die Mehrzahl von Zellen zur Gewährleistung einer hohen Messgenauigkeit nur eine kleine aktive Sensorfläche aufweisen sollten. Zudem kann bei der Verwendung mehrerer Zellen, insbesondere einer Sensormatrix, vor der Durchführung der Vermessung des Werkstücks zunächst eine automatische Kalibrierung des Messwerkzeugs durchgeführt werden. Hierbei wird eine Zelle oder eine Gruppe von Zellen einer Sensormatrix bestimmt, die vom Detektionsstrahl mit der höchsten Lichtintensität beleuchtet werden. Exemplarisch kann vorgesehen sein, dass nur diese Zelle bzw. diese Zellen bei der Durchführung des Messvorgangs ausgewertet werden.

Ergänzend oder alternativ kann vorgesehen sein, die Beleuchtung der Zellen der Sensormatrix an der ersten und/oder an der zweiten Position des Messwerkzeugs, also bei der Unterbrechung und der Aufhebung der Unterbrechung des Detektionsstrahls, zwischenzuspeichern und auszuwerten, um eventuelle Ablenkungseffekte des Detektionsstrahls an der, üblicherweise gekrümmten und reflektierenden, Werkstückoberfläche korrigieren zu können.

Vorteilhaft ist es, wenn das Positioniermittel eine Werkzeugaufnahme für eine austauschbare Anbringung von Bearbeitungswerkzeugen umfasst und wenn das Messwerkzeug zur Festlegung an der Werkzeugaufnahme ausgebildet ist. Eine solche Ausgestaltung des Messwerkzeugs ist insbesondere dann vorteilhaft, wenn die Werkzeugmaschine ein automatisiertes Werkzeugwechselsystem umfasst. Somit kann nach der Durchführung einer Oberflächenbearbeitung am Werkstück das Bearbeitungswerkzeug gegen das Messwerkzeug ausgetauscht werden, um anschließend die gewünschte Vermessung des Werkstücks vornehmen zu können. Dabei kann das Messwerkzeug für eine kabellose Übertragung des an der Empfangseinrichtung aufgrund des Vorliegens oder Nichtvorliegens des Detektionsstrahls anliegenden Signals an eine Maschinensteuerung oder eine andere Auswerteeinrichtung ausgebildet sein. Bei Integration einer entsprechenden Energiequelle in das Messwerkzeug, die insbesondere die Sendeeinrichtung, die Empfangseinrichtung und eine beispielsweise als Funk- oder Infrarotsendemodul ausgebildete Datenübertragungsvorrichtung mit elektrischer Energie versorgt, kann ein autarker, kabelloser Betrieb des Messwerkzeugs erfolgen. Als Energiequelle kommen beispielsweise Batterien, Akkumulatoren oder Kondensatoren in Frage, die insbesondere bei Anordnung des Messwerkzeugs in einem geeigneten Werkzeugmagazin für den nächsten Einsatz des Messwerkzeugs, insbesondere kabellos über eine induktive Kopplung, aufgeladen werden können. Alternativ kann eine derartige kabellose Kopplung auch unmittelbar in die Werkzeugaufnahme integriert sein, so dass das Messwerkzeug im Einsatzfall direkt mit elektrischer Energie versorgt wird. Alternativ ist das Messwerkzeug mit einem Anschlusskabel zum Anschluss an eine elektrische Energieversorgung der Werkzeugmaschine und gegebenenfalls an ein internes Kommunikationssystem der Werkzeugmaschine, beispielsweise ein Bussystem, angekoppelt, um eine Bereitstellung von elektrischer Energie und einen Datenaustausch mit einer Maschinensteuerung der Werkzeugmaschine zu ermöglichen.

Bei einer Weiterbildung der Erfindung ist vorgesehen, dass das Positioniermittel eine Werkzeugaufnahme für eine austauschbare Anbringung von Bearbeitungswerkzeugen sowie eine Messwerkzeugaufnahme zur Festlegung des Messwerkzeugs umfasst. Die Messwerkzeugaufnahme kann für eine mechanische Festlegung und gegebenenfalls zusätzlich für eine elektrische Kopplung des Messwerkzeugs mit der Werkzeugmaschine ausgebildet sein. Vorzugsweise ist das Messwerkzeug auch während des Bearbeitungsvorgangs für das Werkstück in der Messwerkzeugaufnahme aufgenommen, so dass entweder unmittelbar nach Durchführung des Bearbeitungsvorgangs oder gegebenenfalls auch während des Bearbeitungsvorgangs für das Werkstück die gewünschte Messung unverzüglich durchgeführt werden kann.

In weiterer Ausgestaltung der Erfindung ist die Messwerkzeugaufnahme relativbeweglich am Positioniermittel angeordnet, ein Stellmittel ist zur Einleitung einer Relativbewegung zwischen der Messwerkzeugaufnahme und dem Positioniermittel ausgebildet und eine Wegmesseinrichtung ist zur Ermittlung einer Relativposition der Messwerkzeugaufnahme gegenüber dem Positioniermittel ausgebildet. Bei einer linearbeweglichen Kopplung von Messwerkzeugaufnahme und Positioniermittel kann der Messweg für das Messwerkzeug über den Verstellweg des Positioniermittels hinaus vergrößert werden. Ergänzend oder alternativ kann eine drehbeweglichen Kopplung zwischen Messwerkzeugaufnahme und Positioniermittel vorgesehen werden, um das Messwerkzeug zwischen einer raumsparend angeordneten und/oder geschützten Ruheposition während des Bearbeitungsvorgangs für das Werkstück und einer Funktionsposition zur Durchführung des Messvorgangs verschwenken zu können und/oder Ausrichtungsfehler des Messwerkzeugs gegenüber dem Positioniermittel und/oder dem Werkstück zu kompensieren.

Bevorzugt umfasst das Messwerkzeug einen Grundkörper und eine, vorzugsweise beweglich, am Grundkörper angebrachte Auslegeranordnung, wobei die Sendeeinrichtung und die Empfangseinrichtung jeweils an voneinander beabstandeten freien Endbereichen der Auslegeranordnung angeordnet sind. Die Ausleger sind vorzugsweise leistenartig ausgebildet und bilden zusammen mit dem Grundkörper eine im Wesentlichen U-förmige Anordnung. Dabei sind die Sendeeinrichtung und die Empfangseinrichtung jeweils in freien Endbereichen der U-Schenkel angeordnet und ermöglichen hierdurch ein bereichsweises Umgreifen des Werkstücks zur Durchführung des Messvorgangs. Bei einer vorteilhaften Ausgestaltung der Erfindung sind die Ausleger beweglich am Grundkörper angeordnet und können somit je nach Bedarf zwischen einer kompakten Ruhestellung und einer zur Durchführung des Messvorgangs geeigneten Funktionsstellung bewegt werden, während der Grundkörper ortsfest mit dem Positioniermittel verbunden ist, insbesondere am Positioniermittel angebracht ist.

Zweckmäßig ist es, wenn das Messwerkzeug eine Antriebseinrichtung zur Einleitung einer Relativbewegung, insbesondere einer Schwenkbewegung, zwischen den Grundkörper und die Auslegeranordnung umfasst. Hierdurch kann die Bewegung der Auslegeranordnung zwischen der Ruhestellung und der Funktionsstellung automatisiert durchgeführt werden.

In weiterer Ausgestaltung der Erfindung ist vorgesehen, dass dem Messwerkzeug ein Abdeckmittel zugeordnet ist, das zur zumindest teilweisen Aufnahme des Messwerkzeugs in einer Ruhestellung ausgebildet ist. Das Abdeckmittel ist derart gestaltet, dass es zumindest die Sendeeinrichtung und/oder die Empfangseinrichtung vor Umgebungseinflüssen wie beispielsweise Bearbeitungsspänen oder Kühlschmiermittel schützen kann.

Bei einer vorteilhaften Weiterbildung der Erfindung ist dem Messwerkzeug und/oder der Messwerkzeugaufnahme und/oder einem Abdeckmittel für das Messwerkzeug wenigstens eine mit einer Fluidquelle verbindbare Fluiddüse zur Ausgabe eines Reinigungsfluids auf die Sendeeinrichtung und/oder auf die Empfangseinrichtung zugeordnet. Hierdurch kann eine aktive Reinigung der Sende- und/oder Empfangseinrichtung vorgenommen werden. Als Reinigungsfluid kann vorzugsweise Druckluft vorgesehen werden. Bei einer Weiterbildung der Erfindung ist vorgesehen, während der Durchführung des Messvorgangs permanent oder intermittierend eine Reinigung der Sende- und/oder Empfangseinrichtung durchzuführen, um ein vorteilhaftes Messergebnis zu gewährleisten.

Gemäß einem zweiten Aspekt der Erfindung wird die Aufgabe mit einem Verfahren nach Anspruch 10 gelöst. Hierbei sind die folgenden Schritte vorgesehen: Aktvieren eines Messwerkzeugs zum Bereitstellen eines Detektionsstrahls von einer am Messwerkzeug vorgesehenen Sendeeinrichtung an eine gegenüberliegend am Messwerkzeug angeordnete Empfangseinrichtung, Durchführen einer linearen Relativbewegung zwischen dem Messwerkzeug und dem Werkstück, Ermitteln einer ersten Position des Messwerkzeugs bei Unterbrechung des Detektionsstrahls durch das Werkstück, Ermitteln einer zweiten Position des Messwerkzeugs bei Wiederauftreffen des Detektionsstrahls auf die Empfangseinrichtung, Errechnen einer Differenzstrecke zwischen der ersten und der zweiten Position als Werkstückausdehnung des Werkstücks. Vorzugsweise wird vor der Durchführung des Messvorgangs ein Kalibriervorgang vorgesehen, bei dem anstelle eines Werkstücks ein Referenzobjekt in den Werkzeughalter der Werkzeugmaschine aufgenommen wird, dessen Geometrie bekannt ist. Anschließend wird eine Ermittlung der Geometrie des Referenzobjekts durchgeführt, um eine Abweichung zwischen dem gemessenen Wert und dem tatsächlichen Wert für die Geometrie des Referenzobjekts zu ermitteln und um eine entsprechende Korrektur bei der Verarbeitung der Signale des Messwerkzeugs vornehmen zu können.

In weiterer Ausgestaltung des Verfahrens ist vorgesehen, dass das Messwerkzeug vor der Durchführung des Messvorgangs aus einer Ruhestellung in eine Funktionsstellung bewegt, insbesondere verschwenkt, wird und/oder nach der Durchführung des Messvorgangs wieder in die Ruhestellung bewegt wird. Hierdurch wird gewährleistet, dass das Messwerkzeug abseits der Durchführung des Messvorgangs raumsparend am Positioniermittel angeordnet ist und lediglich während der Messung in den Arbeitsraum, in dem die Bearbeitung des Werkstücks mittels des Werkzeugs vorgenommen wird, hineinragt.

In weiterer Ausgestaltung des Verfahrens ist vorgesehen, vor und/oder während der Durchführung des Messvorgangs einen Fluidstrahl auf die Sendeeinrichtung und/oder auf die Empfangseinrichtung und/oder auf das Werkstück zu richten.

In weiterer Ausgestaltung des Verfahrens ist vorgesehen, dass das Werkstück während des Messvorgangs ruht und das Messwerkzeug relativ zum Werkstück, insbesondere quer zu einer Rotationssymmetrieachse des Werkstücks, bewegt wird. Damit kann unmittelbar aus der Wegdifferenz zwischen der zweiten Position und der der ersten Position die gesuchte Geometrie des Werkstücks ermittelt werden. Dies gilt insbesondere dann, wenn die Relativbewegung zwischen Messwerkzeug und einer Längsachse, bei der es sich im Falle eines Drehteils um eine Rotationssymmetrieachse handeln kann, quer zur Längsachse erfolgt. Sofern der Positioniermittel derart gegenüber dem Werkstück ausgerichtet sein sollte, dass eine Bewegungsachse des Positioniermittels einen von 90 Grand abweichenden Winkel mit der Längsachse des Werkstücks einnimmt, muss eine Korrektur der ermittelten Wegdifferenz in Abhängigkeit vom vorliegenden Winkel vorgenommen werden.

In weiterer Ausgestaltung des Verfahrens ist vorgesehen, dass das Messwerkzeug bei Erreichen der ersten und/oder zweiten Position zeitweilig festgelegt wird und eine Relativbewegung des Werkstücks, insbesondere um eine Rotationssymmetrieachse des Werkstücks, vorgenommen wird. Hierdurch kann geprüft werden, ob das Werkstück in einer Querschnittsebene, die von einer Bewegungsachse der Relativbewegung des Messwerkzeugs gegenüber dem Messwerkzeug und der Strahlachse des Detektionsstrahls aufgespannt wird, gleichförmig geformt ist. Dies ist insbesondere bei Drehteilen von Bedeutung, die häufig zumindest abschnittsweise rotationssymmetrisch zu einer Längsachse ausgebildet sind. Hierbei kann durch Rotation des Werkstücks um die Längsachse geprüft werden, ob ausgehend von der ersten und/oder zweiten Position, bei der das Werkstück die Strahlachse des Detektionsstrahls schneidet bzw. gerade nicht mehr schneidet, über den Umfang des Werkstücks eine Unrundheit vorliegt. Ergänzend kann vorgesehen sein, durch eine koordinierte, intermittierende, insbesondere positionsgeregelte, Reversierbewegung des Messwerkzeugs gegenüber dem Werkstück, insbesondere innerhalb eines vorgebbaren Messintervalls, und eine kontinuierliche oder intermittierende Relativbewegung des Werkstücks gegenüber dem Messwerkzeug eine Oberflächenabtastung des Werkstücks zur Ermittlung eines lokalen Werkstückquerschnitts vorzunehmen. Beispielsweise wird ein als Drehteil ausgebildetes Werkstück schrittweise um seine Längsachse gedreht und nach jedem Bewegungsschritt durch eine Bewegung des Messwerkzeugs die erste und/oder die zweite Position ermittelt und die ermittelten Positionen zusammen mit dem Drehwinkel des Werkstücks, der von einer dem Werkstückhalter zugeordneten Messeinrichtung, beispielsweise einem Drehwinkelsensor bereitgestellt wird, verarbeitet, um dadurch den Werkstückquerschnitt zumindest annähernd ermitteln zu können. Alternativ kann in ähnlicher Weise nur der größte lokale Radius des Werkstücks ermittelt werden. Dieser Vorgang kann auch an mehreren Positionen entlang der Längsachse des Werkstücks vorgenommen werden, um an diesen Positionen jeweils die Werkstückgeometrie untersuchen zu können und um zusätzlich eine Aussage über die Ausrichtung des Werkstücks gegenüber dem Werkstückhalter, beispielsweise über einen Zylinderfehler des Werkstücks, treffen zu können. Bei Kenntnis eines Fehlers in der Werkstückgeometrie und/oder in der Einspannung des Werkstücks im Werkstückhalter kann dieser Fehler zumindest teilweise bei der weiteren Bearbeitung des Werkstücks berücksichtigt und kompensiert werden. Ergänzend oder alternativ kann vorgesehen sein, das Werkstück jeweils an der gleichen Längsposition zweifach oder mehrfach zu vermesse, indem nach einer ersten Messung bei ruhendem Werkstück vor dem Zurückfahren des Messwerkzeugs in die Ausgangsposition eine Rotation in das Werkstück eingeleitet wird und anschließend auf dem Rückweg des Messwerkzeugs eine zweite Messung vorgenommen wird, deren Messergebnis mit dem Ergebnis der ersten Messung verglichen werden kann, um daraus Rückschlüsse auf die Qualität der Messung und/oder auf die Geometrie des Werkstücks ziehen zu können.

In weiterer Ausgestaltung des Verfahrens ist vorgesehen, dass die ermittelte Werkstückausdehnung an eine Maschinensteuerung der Werkzeugmaschine bereitgestellt wird und dort anhand der ermittelten Werkstückausdehnung eine Korrektur einer Position eines für einen nachfolgenden Bearbeitungsschritt vorgesehenen Werkzeugs erfolgt. Hierdurch kann eine Verbesserung für die Positionssteuerung oder Positionsregelung des Werkzeugs während des Bearbeitungsvorgangs für das Werkstück erzielt werden.

Eine vorteilhafte Ausführungsform der Erfindung ist in der Zeichnung dargestellt. Dabei zeigt:
- Figur 1: eine schematische Darstellung einer Seitenansicht einer Werkzeugmaschine, die mit einem Messwerkzeug ausgestattet ist,
- Figur 2: eine schematische Vorderansicht der Werkzeugmaschine gemäß Figur 1,
- Figur 3: eine vergrößerte Ausschnittdarstellung eines Werkstücks und des Messwerkzeugs in einer ersten Position,
- Figur 4: das Werkstück und das Messwerkzeug gemäß der Figur 2 in einer Zwischenposition,
- Figur 5: das Werkstück und das Messwerkzeug gemäß der Figur 2 in einer zweiten Position,
- Figur 6: eine schematische Draufsicht auf das Messwerkzeug gemäß den Figuren 1 bis 5 und
- Figur 7: eine schematische Darstellung einer Sensormatrix für eine Empfangseinrichtung eines Messwerkzeugs.

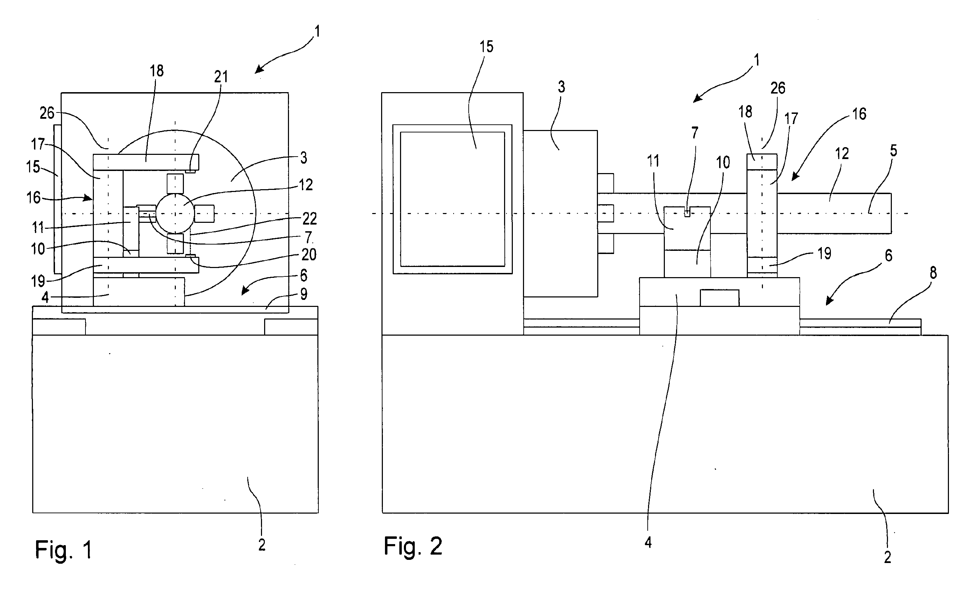

In den Figuren 1 und 2 ist eine exemplarisch als Drehmaschine ausgebildete Werkzeugmaschine 1 dargestellt. Die Werkzeugmaschine 1 umfasst ein Maschinenbett 2, einen beispielhaft als Backenfutter ausgebildeten, drehbar am Maschinenbett 2 gelagerten Werkstückhalter 3 und ein exemplarisch linearbeweglich am Maschinenbett 2 gelagerten, auch als Kreuzsupport oder Werkzeugschlitten bezeichnetes Positioniermittel 4. Vorzugsweise ist das Positioniermittel 4 sowohl parallel als auch quer zu einer Rotationsachse 5 des Werkstückhalters 3 beweglich am Maschinenbett 2 gelagert. Sowohl dem Werkstückhalter 3 als auch dem Positioniermittel 4 sind nicht näher dargestellte Antriebseinrichtungen zugeordnet, die ausgehend vom Maschinenbett 2 eine Drehbewegung auf den Werkstückhalter 3 und Linearbewegungen auf das Positioniermittel 4 einleiten können. Ferner ist dem Positioniermittel 4 eine Wegmesseinrichtung 6 zur Ermittlung einer Position des Positioniermittels 4 gegenüber dem Maschinenbett 2 und somit für die Ermittlung der Position eines am Positioniermittel 4 anbringbaren Werkzeugs 7 gegenüber dem Maschinenbett 2 zugeordnet. Die Wegmesseinrichtung 6 umfasst einen Längsmaßstab 8 zur Erfassung der Position des Positioniermittels 4 längs der Rotationsachse 5 und einen Quermaßstab 9 zur Erfassung der Position des Positioniermittels 4 quer zur Rotationsachse 5. Der Längsmaßstab 8 und der Quermaßstab 9 können exemplarisch als optoelektronische Sensorsysteme mit einem optisch codierten Glasmaßstab und einer Abtasteinrichtung zur inkrementellen oder absoluten Abtastung des Glasmaßstabs ausgebildet sein und stellen dementsprechend ein Relativpositionssignal oder ein Absolutpositionssignal an eine Maschinensteuerung der Werkzeugmaschine 1 bereit.

Am Positioniermittel 4 ist exemplarisch eine Werkzeugaufnahme 10 angebracht, an der das beispielhaft in einem auswechselbaren Werkzeughalter 11 aufgenommene Werkzeug 7 festgelegt ist. Das Werkzeug 7 kann somit durch lineare Relativbewegungen des Positioniermittels 4 gegenüber dem Maschinenbett 2 in unterschiedliche Bearbeitungspositionen gegenüber einem im Werkstückhalter 3 aufgenommenen Werkstück 12 gebracht werden, um dieses beispielsweise spanend zu bearbeiten.

Die Antriebseinrichtungen für den Werkstückhalter 3 und für das Positioniermittel 4 sowie die Maßstäbe 8 und 9 der Wegmesseinrichtung 6 sind elektrisch mit einer auch als Maschinensteuerung bezeichneten Steuereinrichtung 15 verbunden, die zur koordinierten Ansteuerung der Antriebseinrichtungen und zur Auswertung der Signale der Wegmesseinrichtung 6 ausgebildet ist. Die Steuereinrichtung 15 kann beispielsweise als speicherprogrammierbare Steuerung SPS ausgebildet sein und ist mit einer Anzeigeeinrichtung, insbesondere in der Art eines berührungsempfindlichen Bildschirms versehen, an dem die Programmierung der Werkzeugmaschine 1 durgeführt werden kann.

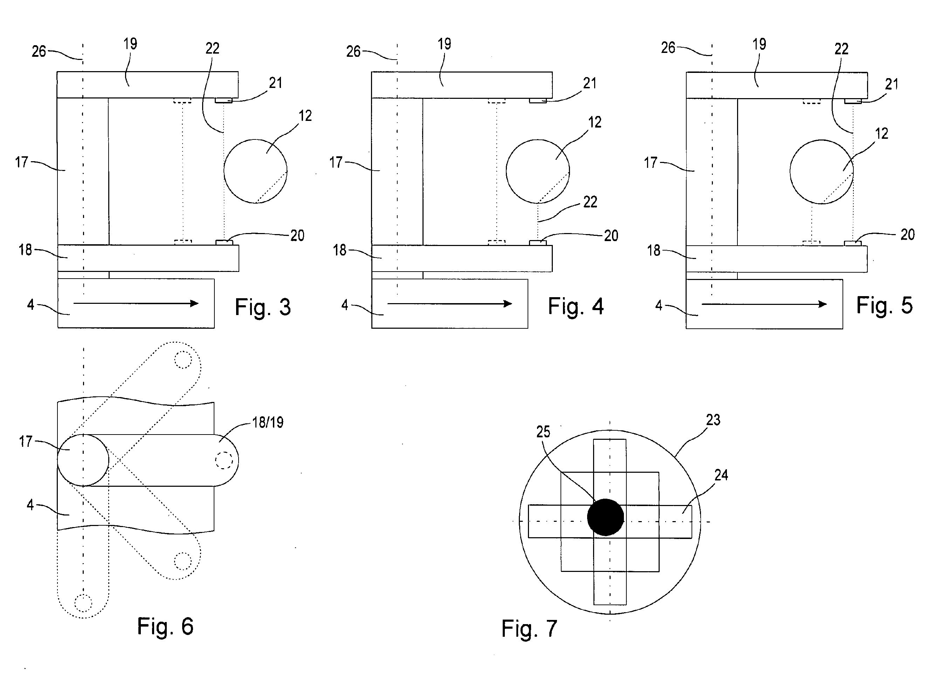

Ferner ist dem Positioniermittel 4 ein Messwerkzeug 16 zugeordnet, das zur Ermittlung einer Geometrie des Werkstücks 12 eingesetzt werden kann und das nachstehend im Zusammenhang mit den Figuren 3 bis 6 näher beschrieben wird.

Das Messwerkzeug 16 umfasst einen exemplarisch rohrförmig ausgebildeten und bei der dargestellten Ausführungsform ortsfest am Positioniermittel 4 festgelegten Grundkörper 17 und eine beweglich am Grundkörper 17 angebrachte Auslegeranordnung, die zwei gleichartig geformte, starr miteinander gekoppelte Ausleger 18 ,19 aufweist. Im ersten Ausleger 18 ist eine exemplarisch als nicht näher dargestellte Laserdiode ausgebildete Sendeeinrichtung 20 angeordnet. Im zweiten Ausleger 19 ist eine exemplarisch als nicht näher dargestellte Fotodiode ausgebildete Empfangseinrichtung 21 angeordnet. Die Sendeeinrichtung 20 und die Empfangseinrichtung 21 sind jeweils an voneinander beabstandeten freien Endbereichen der Ausleger 18, 19 und einander gegenüberliegend angeordnet. Eine Strahlachse 22 eines von der Sendeeinrichtung 20 ausgehenden Detektionsstrahls ist derart ausgerichtet, dass der Detektionsstrahl zentrisch auf die Empfangseinrichtung 21 auftrifft. Die starr miteinander gekoppelten Ausleger 18, 19 sind mit einer am Grundkörper 17 oder am Positioniermittel 4 abgestützten, nicht näher dargestellten Antriebseinrichtung gekoppelt, die zur Einleitung der in der Figur 6 dargestellten Schwenkbewegung in die Ausleger 18, 19 ausgebildet ist. Vorzugsweise handelt es sich bei der Antriebseinrichtung um einen mit der Steuereinrichtung 15 elektrisch gekoppelten und von dieser ansteuerbaren Getriebemotor. Besonders bevorzugt ist die Schwenkachse 26 für die Schwenkbewegung der Ausleger 18, 19 parallel zur Strahlachse 22 ausgerichtet.

Exemplarisch sind auch die Sendeeinrichtung 20 und die Empfangseinrichtung 21 über eine nicht näher dargestellte Kabelverbindung mit der Steuereinrichtung 15 elektrisch verbunden.

Wie aus den Figuren 3 bis 5 entnommen werden kann, wird der Detektionsstrahl von einem Werkstück 12, das die Strahlachse 22 schneidet, bei einer Relativbewegung zwischen Messwerkzeug 16 und Werkstück 12 unterbrochen. Bei einer linearen Bewegung des Messwerkzeugs 16 ausgehend von einer nicht dargestellten Ausgangsposition längs einer Bewegungsachse quer zur Rotationsachse 5 und bei ruhendem Werkstück 12 schneidet das Werkstück 12 die Strahlachse 22 in der in Figur 3 dargestellten ersten Position. Diese erste Position kann anhand des Quermaßstabs 9 gemäß Figur 1 ermittelt werden und an die Steuereinrichtung 15 übertragen werden. Sofern das Messwerkzeug 16 weiter quer zur Rotationsachse 5 bewegt wird, ergibt sich die in Figur 5 dargestellte Situation, in der das Werkstück 12 die Strahlachse 22 nicht mehr schneidet. Sobald nach einer Unterbrechung des Detektionsstrahls ein neuerliches Auftreffen des Detektionsstrahls auf die Empfangseinrichtung 21 erfolgt, ist definitionsgemäß die zweite Position erreicht, die in der Figur 5 dargestellt ist und die ebenfalls an die Steuereinrichtung 15 übertragen wird. Anschließend kann die Steuereinrichtung 15 aus der Wegdifferenz zwischen der ersten und der zweiten Position die gesuchte Geometrie, exemplarisch also den Durchmesser des Werkstücks 12, ermitteln.

In der Figur 6 ist ein möglicher Schwenkbereich für die beiden Ausleger 18, 19 gegenüber dem Grundkörper 17 dargestellt. Dabei können die Ausleger 18, 19 ausgehend von einer gestrichelt dargestellten, um Wesentlichen parallel zur Rotationsachse 5 ausgerichteten Ruhestellung in eine mit durchgezogenen Linien dargestellte Funktionsstellung gebracht werden. Zwischenstellungen zwischen der Ruhestellung und der Funktionsstellung können ebenso vorgesehen sein wie Stellungen, die durch Verschwenkung der Ausleger 18, 19 über die Funktionsstellung hinaus eingenommen werden.

Vorteilhaft ist es, dass das Messwerkzeug 16 unabhängig von der Schwenkstellung stets ein korrektes Messergebnis bereitstellen kann, sofern die Bewegung des Messwerkzeugs 16 während des Messvorgangs quer zur Rotationsachse 5 erfolgt. Dies ist durch die gestrichelte Darstellung der Sendeeinrichtung 20 und der Empfangseinrichtung 21 sowie der Strahlachse 22 in den Figuren 3 bis 5 angedeutet. Hieraus ist abzuleiten, dass die erste und die zweite Position zwar an anderen Orten längs des Quermaßstabs 9 liegen, die Differenz zwischen den beiden Positionen jedoch identisch zur Differenz der beiden Postionen mit den Auslegern 18, 19 in der Funktionsstellung ist.

Sollte die Bedingung der Bewegung des Messwerkzeugs 16 während des Messvorgangs quer zur Rotationsachse 5 nicht gewährleistet sein, so muss für eine Korrektur des Messwerts bekannt sein, in welchem Winkel zur Rotationsachse 5 die lineare Bewegung des Messwerkzeugs 16 vorgenommen wurde. Ferner muss sichergestellt sein, dass in diesem Fall der Detektionsstrahl sowohl an der ersten als auch an der zweiten Position auf den gleichen Geometrieabschnitt des Werkstücks 12 auftrifft.

In der Figur 7 ist eine Ausführungsform einer als Diodenmatrix 23 ausgebildeten Empfangseinrichtung 21 dargestellt. Die Diodenmatrix 23 umfasst mehrere rasterartig angeordnete, lichtempfindliche Dioden 24, die bei Auftreffen des Detektionsstrahls ein elektrisches Signal ausgeben, sofern die Intensität des Detektionsstrahls auf der jeweiligen Diode 24 einen vorgebbaren Schwellwert übersteigt. Mit einer derartigen Diodenmatrix 23, deren Ausdehnung größer ist als ein kreisförmig angedeuteter Lichtfleck 25 des Detektionsstrahls wird erreicht, dass eine Positionierung der Empfangseinrichtung 21 gegenüber der Sendeeinrichtung 20 mit größeren Toleranzen und somit kostengünstiger verwirklicht werden kann, als dies bei einer einzelnen Diode der Fall wäre, die zur Gewährleistung einer hohen Messgenauigkeit die gleiche Ausdehnung aufweist wie die Diode 24. Ferner kann gegebenenfalls durch Speicherung und Auswertung eines Signalverlaufs für die einzelnen Dioden 24 der Diodenmatrix 23 eine gegebenenfalls an der Oberfläche des Werkstücks 12 stattfindende Ablenkung des Detektionsstrahls zumindest teilweise korrigiert werden.

Bei einer nicht näher dargestellten Ausführungsform ist die Empfangseinrichtung als einzelne lichtempfindliche Diode oder als Fototransistor ausgebildet.

Für die Durchführung des Messverfahrens mit dem Messwerkzeug 16 an der Werkzeugmaschine 1 sind exemplarisch die folgenden Schritte vorgesehen, die durch die Steuereinrichtung 15 koordiniert und durch Ansteuerung der jeweiligen Antriebseinrichtungen sowie des Messwerkzeugs 16 und durch Auswertung von Signalen des Messwerkzeugs 16 und der Wegmesseinrichtung 6 durchgeführt werden.

Zunächst wird das Positioniermittel 4 mit dem darauf montierten Messwerkzeug 16 durch eine Linearbewegung quer zur Rotationsachse 5 in eine Ausgangsposition, insbesondere in eine Endanschlagsposition, gebracht. In dieser Ausgangsposition sollte sichergestellt sein, dass die Strahlachse 22 nicht vom Werkstück 12 geschnitten wird, nachdem die Ausleger 18, 19 aus der in Figur 6 gestrichelt dargestellten, parallel zur Rotationsachse 5 ausgerichteten Ruheposition in die in Figur 6 durchgezogen dargestellte Funktionsposition gebracht wurden. Anschließend erfolgt ein fakultativer Selbsttest des Messwerkzeugs 16, bei dem ein Detektionsstrahl von der Sendeeinrichtung 20 an die Empfangseinrichtung 21 ausgesendet wird. Sofern die Empfangseinrichtung 21 aufgrund eines korrekt auftreffenden Detektionsstrahls ein vorgebbares Signal einer einzigen Diode oder ein vorgebbares Signalmuster einer Diodenmatrix 23 an die Steuereinrichtung 15 bereitstellt, wird bei Aufrechterhaltung der Aussendung des Detektionsstrahls eine Bewegung des Messwerkzeugs 16 quer zur Rotationsachse 5 eingeleitet. Sobald die Steuereinrichtung 15 eine Unterbrechung des Detektionsstrahls feststellt, wird die zugehörige Position des Messwerkzeugs 16, die mit Hilfe des Quermaßstabs 9 ermittelt wird, als erste Position gespeichert. Ferner wird die Linearbewegung des Messwerkzeugs 16 quer zur Rotationsachse 5 fortgesetzt. Sobald die Steuereinrichtung 15 im Zuge der Weiterbewegung des Messwerkzeugs 16 ein erneutes Auftreffen des Detektionsstrahls auf die Empfangseinrichtung 21 feststellt, wird die zugehörige Position des Messwerkzeugs 16, die mit Hilfe des Quermaßstabs 9 ermittelt wird, als zweite Position gespeichert.

Anschließend wird durch Differenzbildung zwischen der zweiten Position und der der ersten Position ein Abstand zwischen den beiden Positionen ermittelt, der der tatsächlichen Geometrie des Werkstücks 12 in dem abgetasteten Bereich entspricht. Mit dem Messergebnis kann die Steuereinrichtung 15 nach Vergleich mit einem gespeicherten Maß-Sollwert als Ergebnis des vorausgegangenen Bearbeitungsschritts eine Korrektur der Werkzeugposition für einen nachfolgenden Bearbeitungsschritt vornehmen, um eine möglichst maßhaltige Bearbeitung des Werkstücks 12 sicherzustellen.

Vorzugsweise wird in vorgebbaren Intervallen anstelle des Werkstücks 12 ein nicht dargestellter Referenzkörper in den Werkstückhalter 3 eingespannt, der vorzugsweise mehrere unterschiedliche bekannte Querschnitte aufweist und der mit dem Messwerkzeug 16 vermessen wird, um eventuelle Messfehler des Messwerkzeugs 16 korrigieren können.

Bei einer nicht dargestellten Ausführungsform der Erfindung sind die Ausleger des Messwerkzeugs fest mit dem Grundkörper verbunden, der seinerseits derart auf die Werkzeugaufnahme 10 angepasst ist, dass das Messwerkzeug im Austausch gegen einen aus der Figur 1 bekannten Werkzeughalter 11 an einem nicht näher dargestellten Positioniermittel festgelegt werden kann. In diesem Fall entfällt die separate Platzierung des Messwerkzeugs 16 am Positioniermittel und das Positioniermittel kann gegenüber dem aus den Figuren 1 und 2 bekannten Positioniermittel 4 kompakter gestaltet werden. Das Messwerkzeug umfasst bei dieser nicht dargestellten Ausführungsform einen Energiespeicher, insbesondere einen Akkumulator, und eine Ansteuer- und Verarbeitungseinrichtung, die für eine Ansteuerung der Sendeeinrichtung und für eine Auswertung von Signalen der Empfangseinrichtung ausgebildet ist. Ferner umfasst das Messwerkzeug eine beispielsweise als Funk- oder Infrarotsendemodul ausgebildete Datenübertragungsvorrichtung, die eine drahtlose Übermittlung des von der Empfangseinrichtung bereitgestellten Signals an eine Maschinensteuerung ermöglicht. Ergänzend kann das Messwerkzeug eine Ladeeinrichtung umfassen, die für eine kontaktlose, insbesondere induktive, Energieeinspeisung an den Energiespeicher ausgebildet ist. Vorzugsweise ist in einem Werkzeugmagazin, in das das Messwerkzeug bei Nichtbenutzung abgesetzt wird, ein zur Ladeeinrichtung korrespondierendes Lademodul vorgesehen, das die Aufladung des Energiespeichers im Werkzeugmagazin gewährleistet. Besonders vorteilhaft ist es, wenn die Ansteuer- und Verarbeitungseinrichtung und die Datenübertragungsvorrichtung für eine bidirektionale Datenübertragung und -verarbeitung ausgebildet sind, so dass beispielsweise ein Einschaltsignal für die Sendeeinrichtung von der Steuereinrichtung 15 vorgegeben werden kann.

## Patentansprüche

1. Werkzeugmaschine mit einem Maschinenbett (2), einem daran angebrachten Werkstückhalter (3) und einem linearbeweglich am Maschinenbett (2) gelagerten Positioniermittel (4), dem eine Antriebseinrichtung zur Einleitung einer Relativbewegung zwischen Maschinenbett (2) und Positioniermittel (4) und eine Wegmesseinrichtung (8, 9) zur Ermittlung einer Position des Positioniermittels (4) gegenüber dem Maschinenbett (2) zugeordnet sind, sowie mit einer Steuereinrichtung (15), die mit der Antriebseinrichtung und mit der Wegmesseinrichtung (8, 9) gekoppelt ist und die für eine Positionssteuerung oder Positionsregelung des Positioniermittels (4) gegenüber dem Maschinenbett (2) ausgebildet ist, wobei dem Positioniermittel (4) ein Messwerkzeug (16) zugeordnet ist, das eine Sendeeinrichtung (20) zur Aussendung eines Detektionsstrahls und eine der Sendeeinrichtung (20) gegenüberliegend angeordnete Empfangseinrichtung (21) zum Empfang des Detektionsstrahls umfasst und das zur Ermittlung einer Werkstückausdehnung, insbesondere eines Durchmessers, eines im Werkstückhalter (3) aufnehmbaren Werkstücks (12) ausgebildet ist.

2. Werkzeugmaschine nach Anspruch 1, **dadurch gekennzeichnet, dass** die Sendeeinrichtung (20) als Lichtquelle, insbesondere als Laserlichtquelle, und die Empfangseinrichtung (21) als lichtempfindlicher Sensor, insbesondere als Fotodiode oder Fototransistor, ausgebildet sind.

3. Werkzeugmaschine nach Anspruch 1 oder 2, **dadurch gekennzeichnet, dass** dem Positioniermittel (4) eine Werkzeugaufnahme (10) für eine austauschbare Anbringung von Werkzeugen (7) zugeordnet ist und dass das Messwerkzeug (16) zur Festlegung an der Werkzeugaufnahme (10) ausgebildet ist.

4. Werkzeugmaschine nach Anspruch 1 oder 2, **dadurch gekennzeichnet, dass** dem Positioniermittel (4) eine Werkzeugaufnahme (10) für eine austauschbare Anbringung von Werkzeugen (7) sowie eine Messwerkzeugaufnahme zur Festlegung des Messwerkzeugs (16) zugeordnet ist.

5. Werkzeugmaschine nach Anspruch 4, **dadurch gekennzeichnet, dass** die Messwerkzeugaufnahme relativbeweglich am Positioniermittel (16) angeordnet ist und ein Stellmittel zur Einleitung einer Relativbewegung zwischen der Messwerkzeugaufnahme und dem Positioniermittel (16) sowie eine Wegmesseinrichtung zur Ermittlung einer Relativposition der Messwerkzeugaufnahme gegenüber dem Positioniermittel (16) ausgebildet sind.

6. Werkzeugmaschine nach einem der vorhergehenden Ansprüche, **dadurch gekennzeichnet, dass** das Messwerkzeug (16) einen Grundkörper (17) und eine, vorzugsweise beweglich, am Grundkörper (17) angebrachte Auslegeranordnung (18, 19) umfasst, wobei die Sendeeinrichtung (20) und die Empfangseinrichtung (21) jeweils an voneinander beabstandeten freien Endbereichen der Auslegeranordnung (18, 19) angeordnet sind.

7. Werkzeugmaschine nach Anspruch 6, **dadurch gekennzeichnet, dass** das Messwerkzeug (16) eine Antriebseinrichtung zur Einleitung einer Relativbewegung, insbesondere einer Schwenkbewegung, zwischen den Grundkörper (17) und die Auslegeranordnung (18, 19) umfasst.

8. Werkzeugmaschine nach einem der vorhergehenden Ansprüche, **dadurch gekennzeichnet, dass** dem Messwerkzeug (16) ein Abdeckmittel zugeordnet ist, das zur zumindest teilweisen Aufnahme des Messwerkzeugs (16) in einer Ruhestellung ausgebildet ist.

9. Werkzeugmaschine nach einem der vorhergehenden Ansprüche, **dadurch gekennzeichnet, dass** dem Messwerkzeug (16) und/oder der Messwerkzeugaufnahme und/oder einem Abdeckmittel für das Messwerkzeug (16) wenigstens eine mit einer Fluidquelle verbindbare Fluiddüse zur Ausgabe eines Reinigungsfluids auf die Sendeeinrichtung (20) und/oder auf die Empfangseinrichtung (21) zugeordnet ist.

10. Verfahren zur Ermittlung einer Geometrie eines Werkstücks (12), das an einer, insbesondere nach einem der vorhergehenden Ansprüche ausgebildeten, Werkzeugmaschine (1) aufgenommenen ist, mit den Schritten: Aktvieren eines Messwerkzeugs (16) zum Bereitstellen eines Detektionsstrahls von einer am Messwerkzeug (16) vorgesehenen Sendeeinrichtung (20) an eine gegenüberliegend am Messwerkzeug (16) angeordnete Empfangseinrichtung (21), Durchführen einer linearen Relativbewegung zwischen dem Messwerkzeug (16) und dem Werkstück (12), Ermitteln einer ersten Position des Messwerkzeugs (16) bei Unterbrechung des Detektionsstrahls durch das Werkstück (12), Ermitteln einer zweiten Position des Messwerkzeugs (16) bei Wiederauftreffen des Detektionsstrahls auf die Empfangseinrichtung (21), Errechnen einer Differenzstrecke zwischen der ersten und der zweiten Position als Werkstückausdehnung des Werkstücks (12).

11. Verfahren nach Anspruch 10, **dadurch gekennzeichnet, dass** das Messwerkzeug (16) vor der Durchführung des Messvorgangs aus einer Ruhestellung in eine Funktionsstellung bewegt, insbesondere verschwenkt, wird und/oder nach der Durchführung des Messvorgangs wieder in die Ruhestellung bewegt wird.

12. Verfahren nach Anspruch 10 oder 11, **dadurch gekennzeichnet, dass** vor und/oder während der Durchführung des Messvorgangs ein Fluidstrahl auf die Sendeeinrichtung (20) und/oder auf die Empfangseinrichtung (21) und/oder auf das Werkstück (12) gerichtet wird.

13. Verfahren nach Anspruch 10, **dadurch gekennzeichnet, dass** das Werkstück (12) während des Messvorgangs ruht und das Messwerkzeug (16) relativ zum Werkstück (12), insbesondere quer zu einer Rotationssymmetrieachse (5) des Werkstücks (12), bewegt wird.

14. Verfahren nach Anspruch 10, **dadurch gekennzeichnet, dass** das Messwerkzeug (16) bei Erreichen der ersten und/oder zweiten Position zeitweilig festgelegt wird und eine Relativbewegung des Werkstücks (12), insbesondere um eine Rotationssymmetrieachse (5) des Werkstücks (12), vorgenommen wird.

15. Verfahren nach Anspruch 10, **dadurch gekennzeichnet, dass** die ermittelte Werkstückausdehnung an eine Maschinensteuerung (15) der Werkzeugmaschine (1) bereitgestellt wird und dort anhand der ermittelten Werkstückausdehnung eine Korrektur einer Position eines für einen nachfolgenden Bearbeitungsschritt vorgesehenen Werkzeugs (7) erfolgt.
